Europäisches Patentamt

European Patent Office

Office européen des brevets

(11) Veröffentlichungsnummer: **0 463 313 A1**

# (12) EUROPÄISCHE PATENTANMELDUNG

(21) Anmeldenummer: **91106196.8**

(22) Anmeldetag: **18.04.91**

(51) Int. Cl.5: **B01D 19/02**

(30) Priorität: **29.06.90 DE 4020645**

(43) Veröffentlichungstag der Anmeldung:
**02.01.92 Patentblatt 92/01**

(84) Benannte Vertragsstaaten:
**AT BE CH DE ES FR GB IT LI NL SE**

(71) Anmelder: **Chemap AG**
**Hölzliwisenstrasse 5**

**CH-8604 Volketswil(CH)**

(72) Erfinder: **Sotirianos, Konstantin**
**Glärnischstrasse 38**
**CH-8712 Stäfa(CH)**

(74) Vertreter: **Vonnemann, Gerhard, Dr.-Ing. et al**
**Jungfernstieg 38**
**W-2000 Hamburg 36(DE)**

(54) **Verfahren und Apparat zur Zerlegung von Schaum.**

(57) Die Erfindung betrifft ein Verfahren zur Zerlegung von Schaum in seine flüssigen und gasförmigen Komponenten unter Einwirkung von Zentrifugalkräften, wobei der Schaum (35) axial angesaugt, dann radial (36) unter Einwirkung des Zentrifugalkraftfeldes nach außen beschleunigt und die gasförmige Komponente durch einen Gasaustritt (34) abgeleitet wird, bevor die flüssige Komponente gedrosselt durch einen Ablauf (33) ausgestoßen wird. Ein Apparat zur Zerlegung von Schaum weist ein Schleuderrad (7) und einen Gasaustritt (33) auf, wobei das Schleuderrad als ein rotierend auftreibbar ausgebildetes Pumpenrad ausgebildet ist mit axial angeordnetem Zulauf und einem im Bereich des Pumpenradumfangs angeordneten, gedrosselt ausgebildeten Ablauf sowie einem radial (17,16,15) zwischen Zulauf und Ablauf angeordneten Gasaustritt.

Fig. 1

EP 0 463 313 A1

Die Erfindung betrifft eine Verfahren und einen Apparat zur Zerlegung von Schaum in seine flüssigen und gasförmigen Komponenten unter Einwirkung von Zentrifugalkräften. Zur Erzeugung der Zentrifugalkräfte besitzt der Apparat ein Schleuderrad mit einem Gasaustritt.

Ein derartiges Verfahren und ein Apparat zur Zerlegung von Schaum ist beispielsweise aus der schweizer Patentschrift 615 100 bekannt. Dieses bekannte mechanische Verfahren zur Schaumzerstörung zerlegt den Schaum in seine flüssigen und gasförmigen Bestandteile unter Einwirkung von Zentrifugalkräften.

Der Apparat weist ein Schleuderrad auf, daß aus zwei parallelen Scheiben besteht, zwischen denen radial oder tangential angeordnete Schikanen verschiedener Formen befestigt sind. Der Abstand zwischen den beiden Scheiben ist größer als ihr Durchmesser. Das Schleuderrad wird von einem Elektromotor angetrieben. In der oberen Scheibe ist konzentrisch zur Antriebsachse eine Öffnung als Gasaustritt vorgesehen.

Der Schaum tritt bei dem bekannten Schaumzerstörer an der Peripherie des Schleuderrades ein. Dabei werden die flüssigen, schwereren Bestandteile des Schaums zurückgeschleudert, während die leichten, gasförmigen Bestandteile durch den Gasaustritt den Bereich des Schleuderrades verlassen.

Dieser Schaumabscheider hat den Nachteil, daß er bei größerem Schaumanfall sowie bei festeren Schäumen in seiner Leistungsfähigkeit nachläßt. Die Folge davon ist ein höherer Energieverbrauch und die Gefahr, daß Schaum auch aus dem Gasaustritt mit ausgetragen wird.

Aufgabe der Erfindung ist es, ein Verfahren anzugeben, mit dem Schaum mit geringerem Energieverbrauch wirkungsvoller in seine Komponenten getrennt werden kann. Das Verfahren soll unanfälliger gegen Betriebsstörungen sein und eine höhere Trennschärfe aufweisen.

Außerdem ist es Aufgabe der Erfindung, einen Apparat anzugeben, der geeignet ist, Schaum nach dem erfindungsgemäßen Verfahren zu trennen. Insbesondre soll er unaufwendig zu fertigen sein und bei kleineren Abmessungen höhere Leistungen als bekannte Schaumzerstörer aufweisen.

Die Verfahrensaufgabe wird durch die Merkmale des Patentanspruchs 1 gelöst.

Es wurde überraschenderweise gefunden, daß das Flüssigkeits-Gas-Gemisch schon beim Ansaugen getrennt wird. Dies wird dadurch erklärt, daß durch die Ansaugkraft die leichteren gasförmigen Bestandteile des Schaum nach oben beschleunigt werden, während die flüssigen, schwereren Bestandteile sich absetzen. Hierdurch wird die Wirksamkeit des Schaumzerstörers erhöht und der Energiebedarf entsprechend geringer. Vermutlich resultiert die Überlegenheit des erfindungsgemäßen Verfahrens gegenüber den bekannten Verfahren auch daher, weil dem Schaum eine definierte Strömungsrichtung aufgeprägt wird und größere Scherkräfte wirken, die die vorhandene Membranen im Schaum mechanisch zerstören.

Zur Erhöhung der Trennwirkung kann auch die durch den Ablauf ausgestoßene flüssige Komponente gegen Prallflächen geleitet werden. Nachdem die flüssige Komponente den Ablauf verlassen hat, trifft sie nach einer Freiflugphase auf Prallflächen, von denen sie unter Verlust möglicherweise vorhandenen Restgases dann abtropft.

Wenn der Schaum durch ein Rohr ausgesaugt wird, kann auch bei geringerer Befüllung eines Behälters entstandener Schaum in seine Komponenten zerlegt und die Schaumhöhe wirkungsvoll beeinflußt werden.

In weiterer Ausgestaltung des Verfahrens ist vorgesehen, daß die gasförmige Komponente radial entgegen der aufgeprägten Strömungsrichtung des Schaums, vorzugsweise unter Einwirkung eines Zentrifugalkraftfeldes, geleitet wird. Hierdurch wird eine noch größere Trennschärfe erzielt, da vom Gasstrom mitgerissene Flüssigkeitspartikel zusätzlich noch ausgetragen werden.

Die Maßnahme, daß die gasförmige Komponente axial abgeleitet wird, ergibt vorteilhaft lange Strömungswege für das Gas unter Einwirkung von Zentrifugalkräften und verbessert dadurch die Trennschärfe.

Die weitere Ausgestaltung, daß die abgetrennte flüssige Komponente dem anzusaugenden Schaum wieder zugeführt wird, erlaubt es, mit der flüssigen Komponente ggf. ausgetragene Luftblasen durch mehrmaliges Behandeln noch abzutrennen.

Die schaumzerstörende Wirkung des Verfahrens kann noch weiter erhöht werden, wenn der Schaum und/oder mindestens eine der abgetrennten Komponenten zusätzlich Scherkräften ausgesetzt wird.

Zur Verbesserung der Trennschärfe und zur Erhöhung der schaumzerstörenden Wirkung können auch die abgetrennten Komponenten einer weiteren Trennung in ihre Komponenten unterzogen werden.

Für die Durchführung des erfindungsgemäßen Verfahrens ist ein Apparat zur Zerlegung von Schaum mit einem Schleuderrad bei dem das Schleuderrad als ein rotierend auftreibbares Pumpenrad ausgebildet ist, das einen axial angeordneten Zulauf und einen im Bereich des Pumpenradumfangs angeordneten Ablauf sowie einen Gasaustritt aufweist, wobei der Gasaustritt weiter vom Zentrum des Pumpenrades angeordnet ist als der Zulauf.

Wenn er im Bereich des Ablaufs angeordnete Prallflächen aufweist, läßt sich eine weitere Verbesserung des Trennergebnisses erzielen.

Auch bei geringeren Füllhöhen eines Behälters kann Schaum in seine Komponenten zerlegt werden, wenn der Zulauf als, vorzugsweise höhenverstellbar ausgebildetes, Rohr ausgebildet ist.

Das Pumpenrad sorgt für einen vorteilhaft hohen Schaumfluß durch den Apparat bei vermindertem Energiebedarf. Dadurch, daß oberhalb des Pumpenrades ein Abschlußdeckel angeordnet ist, der vorzugsweise konisch ausgebildet ist, lassen sich die gasförmigen Komponenten besonders günstig sammeln und axial abführen.

In weiterer Ausgestaltung des Apparates ist vorgesehen, daß das Pumpenrad einen oberen und einen unteren Teller aufweist, zwischen denen Rippen angeordnet sind. Ein derartig ausgebildetes Pumpenrad hat sich in der Praxis als besonders effizient erwiesen und läßt sich ohne besonderen Fertigungsaufwand kostengünstig herstellen.

Die Ausgestaltung, daß der obere Teller Auslaßöffnungen für die gasförmigen Komponenten aufweist, die düsenförmig ausgebildet sind, bewirkt eine erhöhte Abströmgeschwindigkeit im Drosselquerschnitt, so daß vermutlich infolge höherer Schwerkräfte die Trennschärfe verbessert wird.

Der Zufluß zum Apparat läßt sich konstruktiv besonders einfach lösen, wenn der untere Teller eine axiale Öffnung als Zulauf aufweist und vorzugsweise mit dem Abschlußdeckel am Umfang einen Drosselspalt bildend angeordnet ist.

Auch die Ausgestaltung, daß zwischen oberem Teller und Abschlußdeckel weitere Rippen angeordnet sind, dient der Verbesserung der Trennschärfe und der schaumzerstörenden Wirkung des Apparats.

Wenn der Drosselspalt und/oder die Auslaßöffnung veränderbar ausgebildet ist, läßt sich die Vorrichtung auch bei sehr unterschiedlichen Schäumen verwenden. Je nach Konsistenz, Viskosität und Festigkeit des Schaums können durch Veränderung der Drosselwirkung beim Auslaß der gasförmigen Komponenten bzw. der flüssigen Komponenten durch versuche die gewünschten Betriebsparameter gefunden werden.

Der Apparat gestaltet sich konstruktiv besonders einfach, wenn Abschlußdeckel und Pumpenrad als gemeinsam rotierende Baueinheit ausgebildet sind. Die Maßnahme, daß die Teller oder Rippen und/oder der Abschlußdeckel relativ zueinander um eine gemeinsame Rotationsachse beweglich ausgebildet sind, wobei der Abschlußdeckel vorzugsweise feststeht, erhöht die schaumzerstörende Wirkung des Apparates, da durch die Relativbewegung zueinander zusätzlich Scherkräfte in den Schaum eingeleitet werden, die die Gasblasenmembran zerreißen. Die Relativbewegung läßt sich dann besonders einfach erreichen, wenn der Abschlußdeckel feststehend ausgebildet ist.

Mit Hilfe geeigneter Stellglieder läßt sich der Betrieb des erfindungsgemäßen Apparates vorteilhaft automatisieren, wenn er einen Antrieb und/oder einen Drosselspalt aufweist, der vorzugsweise geregelt ausgebildet ist.

Der Durchsatz und die Trennschärfe des Apparates läßt sich weiter vorteilhaft erhöhen, wenn mehrere Teller mit Gasaustritten übereinander angeordnet sind.

Weitere Vorteile, Einzelheiten und erfindungswesentliche Merkmale ergeben sich aus der nachfolgenden Beschreibung einer bevorzugten Ausführungsform der Erfindung unter Bezugnahme auf die beigefügten Zeichnungen.

Die Zeichnungen zeigen im einzelnen:

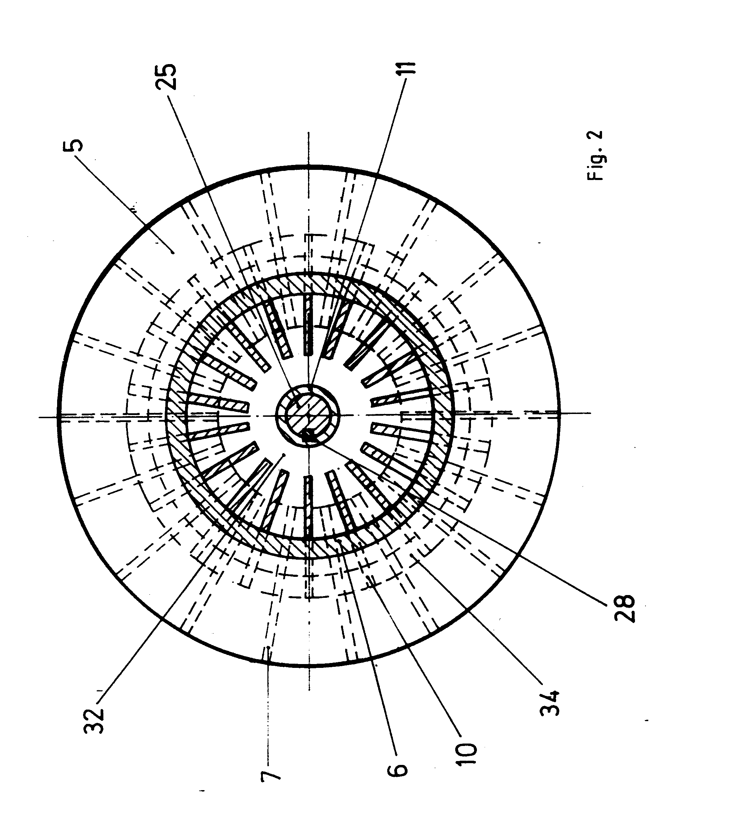

Fig. 1 einen Schnitt durch den Apparat zum Zerstören von Schaum entsprechend Schnittlinie I-I aus Fig. 2,

Fig. 2 einen Schnitt entsprechend Schnittlinie I-I aus Figur 1 und

Fig. 3 einen Schnitt durch den Apparat analog Fig. 2 jedoch mit zusätzlichen Prallflächen und einem Ansaugrohr.

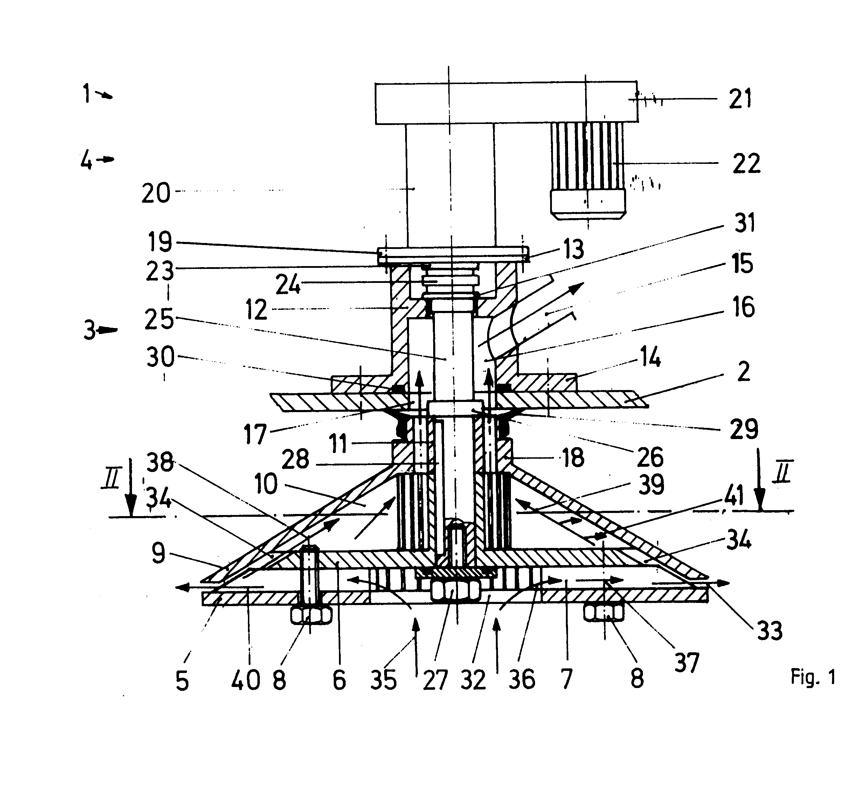

In Figur 1 bedeutet 1 einen Schaumzerstörer, der in einem Behälter eingebaut ist, von dem lediglich die Wandung 2 gezeichnet ist. Außerhalb des Behälters 2 ist eine Konsole 3 mit Antriebseinheit 4 vorgesehen.

Im unteren Bereich des Schaumzerstörers 1 ist ein unterer Teller 5 und ein oberer Teller 6 angeordnet. Den Abstand der Teller 5, 6 überbrücken Rippen 7. Mittels Schrauben 8 sind der untere Teller 5, der obere Teller 6 und die Rippen 7 zu einer Baueinheit zusammengefügt. Oberhalb der Teller 5, 6 ist ein konusförmiger Abschlußdeckel angeordnet, wobei zwischen Abschlußdeckel 9 und oberem Teller 6 zusätzliche, sternförmig ausgerichtete weitere Rippen 10 vorgesehen sind. Der obere Deckel 6 ist fest mit Wellenhülse 11 verbunden.

Außerhalb der Wandung 2 befindet sich die Konsole 3, deren zylindrischer Gehäuseteil 12 einen oberen Flansch 13 und einen unteren Flansch 14 aufweist. Mit dem unteren Flansch 14 ist Konsole 3 fest an der Behälterwandung 2 mittels nicht gezeichneter Schrauben montiert. Aus dem zylindrischen Gehäuseteil 12 führt ein Stutzen 15 heraus, der mit dem Inneren des Behälters über den Innenraum 16 des zylindrischen Gehäuseteils 12 und Öffnung 17 der Behälterwandung 2 und einem rohrförmigen Ansatz 18 des Abschlußdeckels 9 kommuniziert. Der obere Flansch 13 dient zur Befestigung eines entsprechenden Gegenflansches 19, der Getriebe 20 mit Vorgelege 21 und Antriebsmotor 22 als eine Antriebseinheit 4 auf der Konsole 3 verbindet.

Die Antriebsenergie des Motors 22 wird von der Abtriebswelle 23 über Kupplung 24 auf Welle 25 übertragen. Auf dieser Welle 25 ist die Wellenhülse 11 des oberen Tellers 6 bis an Wellenbund 26 anschlagend aufgesteckt und mittels Schraube 27 axial fixiert. Zur Übertragung des Drehmomentes zwischen Welle 25 und Wellenhülse 11 ist Feder 28 vorgesehen.

Der Abschlußdeckel 9 ist durch Dichtmanschette 29 gegenüber der Behälterwandung 2 abgedichtet. Der Innenraum 16 des zylindrischen Gehäuseteils 12 wird zur Behälterwand mittels Ring 30 und zum Antrieb hin mittels Ring 31 gedichtet.

Der untere Teller 5 weist als Zulauf für das Schaum-, Flüssigkeitsgemisch eine zentrale Öffnung 32 auf. Die äußere Umfangskante des Abschlußdeckels 9 bildet zusammen mit der äußeren Umfangskante des unteren Tellers 5 einen Drosselspalt 33 für den Ablauf der flüssigen Komponente. Zwischen Abschlußdeckel 9 und oberem Teller 6 sind weitere Rippen 10 angeordnet. Gasaustritte 34 im oberen Teller 6 verbinden den Raum zwischen den Tellern 5, 6 mit dem Raum, in dem sich die weiteren Rippen 10 befinden. Die Funktionsweise des Apparats ist wie folgt:

Der Schaum bzw. das Schaum-, Flüssigkeitsgemisch tritt in Richtung des Pfeils 35 durch die zentrale Öffnung 32 des unteren Tellers 5 in den Zwischenraum zwischen dem unteren Teller 5 und dem oberen Teller 6 ein. Dort wird der Schaum in Pfeilrichtung 36 umgelenkt und zentrifugal von den Rippen 7 in Richtung der Pfeile 37 beschleunigt. An den Rippen 7 sowie an dem oberen Abschlußdeckel 9, im Drosselspalt 33 und in den Gasaustrittsöffnungen 34 wird der Schaum zerstört. Die gasförmige leichtere Komponente tritt durch die düsenförmig ausgebildeten Gasaustritte 34 in den Zwischenraum zwischen dem oberen Teller 6 und dem Abschlußdeckel 9 ein, während die schwerere flüssige Komponente durch den Drosselspalt 33 nach außen gefördert wird. Durch die gasförmigen Komponenten werden mitgerissene Flüssigkeitstropfen in Pfeilrichtung 41 gegen Abschlußdeckel 9 geschleudert und dann ebenfalls durch Drosselspalt 33 ausgetragen. Die gasförmigen Komponenten gelangen schließlich durch den rohrförmigen Ansatz 18 in Raum 16, aus dem sie durch Stutzen 15 in ein nicht dargestelltes Rohrleitungssystem gelangen.

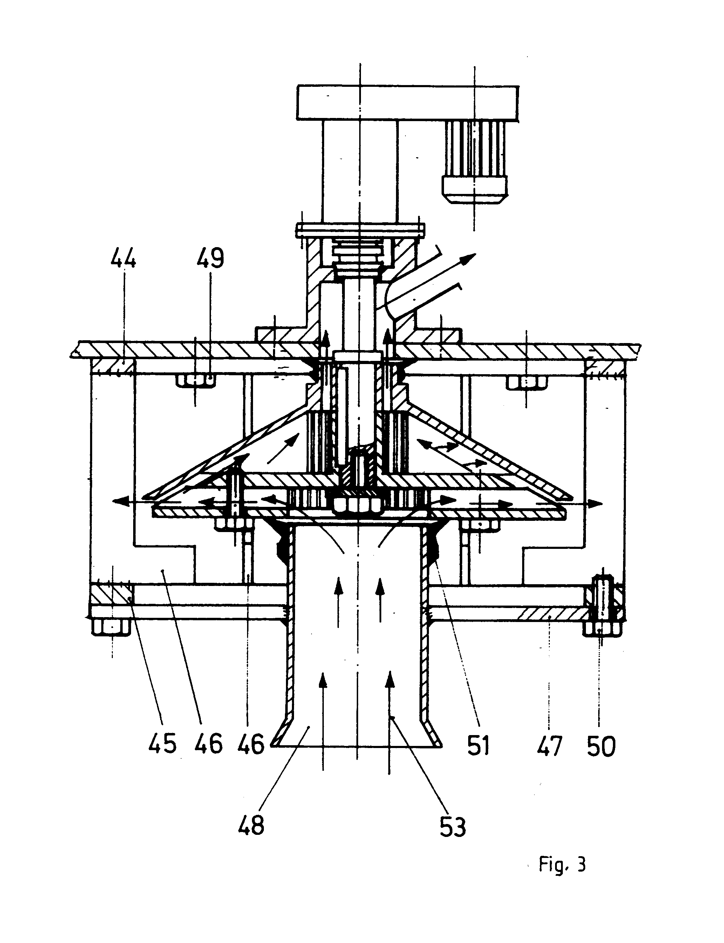

In Figur 3 ist der vorbeschriebene Apparat mit einer zusätzlichen Baueinheit 43 ausgerüstet, die aus einem oberen Ring 44, einem unteren Ring 45, dazwischen angeordneten Stegen 46 sowie einem vom einem weiteren Ring 47 gehalterten Ansaugrohr 48 besteht. Der obere Ring 44 ist mittels Schrauben 49 an der Behälterwandung 2 befestigt. Die Stege 46 fügen die beiden Ringe 44 und 45 zu einer Einheit zusammen, indem sie an den jeweiligen Enden mit den Ringen durch Schweißnähte verbunden sind.

Der Ring 47 mit, in dessen zentraler Öffnung das Rohr 48 eingeschweißt ist, ist mittels Schraube 50 am Ring 45 befestigt. Das obere Ende des Ansaugrohres 48 ist mittels Dichtung 51 gegenüber dem unteren Teller 5 abgedichtet, so daß das Schaum-Flüssigkeits-Gemisch in Pfeilrichtung 52 durch die untere Öffnung des Ansaugrohres 48 eintritt und der zentralen Öffnung im unteren Teller 5 zugeleitet wird. Die gemäß Pfeilrichtung 53 geschleuderte Flüssigkeit trifft auf die Stege 46, so daß deren Oberfläche als Prallfläche dienend die Zerlegung des Schaums in seine Komponenten weiter unterstützt.

# B E Z U G S Z E I C H E N L I S T E

| 1 | Schaumzerstörer | 27 | Schraube |
|---|---|---|---|
| 2 | Behälterwandung | 28 | Feder |
| 3 | Konsole | 29 | Dichtmanschette |
| 4 | Antriebseinheit | 30 | Dichtring |
| 5 | unterer Teller | 31 | Dichtring |
| 6 | oberer Teller | 32 | zentrale Öffnung (Zulauf) |
| 7 | Rippen | 33 | Drosselspalt (Ablauf) |
| 8 | Schrauben | 34 | Gasaustritt |
| 9 | Abschlußdeckel | 35 | Pfeil |
| 10 | weitere Rippen | 36 | Pfeil |
| 11 | Wellenhülse | 37 | Pfeil |
| 12 | zylindrischer Gehäuseteil | 38 | Pfeil |
| 13 | oberer Flansch | 39 | Pfeil |
| 14 | unterer Flansch | 40 | Pfeil |

| | | | |
|---|---|---|---|
| 15 | Stutzen | 41 | Pfeil |
| 16 | Innenraum | 42 | Pfeil |
| 17 | Öffnung | 43 | Baueinheit |
| 18 | rohrförmiger Ansatz | 44 | oberer Ring |
| 19 | Gegenflansch | 45 | unterer Ring |
| 20 | Getriebe | 46 | Steg |
| 21 | Vorgelege | 47 | Ring |
| 22 | Antriebsmotor | 48 | Ansaugrohr |
| 23 | Antriebswelle | 49 | Schrauben |
| 24 | Kupplung | 50 | Schrauben |
| 25 | Welle | 51 | Dichtung |
| 26 | Wellenbund | 52 | Pfeilrichtung |
| | | 53 | Pfeilrichtung |

**Patentansprüche**

1. Verfahren zur Zerlegung von Schaum in seine flüssigen und gasförmigen Komponenten unter Einwirkung von Zentrifugalkräften, bei dem der Schaum axial angesaugt, dann radial unter Einwirkung des Zentrifugalkraftfeldes nach außen beschleunigt **dadurch gekennzeichnet,** daß die gasförmige Komponente durch einen oder mehrere Gasaustritte abgeleitet wird, bevor die flüssige Komponente gedrosselt durch einen Ablauf ausgestoßen wird.

2. Verfahren zur Zerlegung von Schaum nach Anspruch 1, **dadurch gekennzeichnet,** daß die durch den Ablauf ausgestoßene flüssige Komponente gegen Prallflächen geleitet wird.

3. Verfahren zur Zerlegung von Schaum nach Anspruch 1 oder 2, **dadurch gekennzeichnet,** daß der Schaum durch ein Rohr ausgesaugt wird.

4. Verfahren zur Zerlegung von Schaum nach Anspruch 1, **dadurch gekennzeichnet,** daß die gasförmige Komponente radial entgegen der aufgeprägten Strömungsrichtung des Schaums, vorzugsweise unter Einwirkung eines Zentrifugalkraftfeldes, geleitet wird.

5. Verfahren zur Zerlegung von Schaum nach Anspruch 1 oder 2, **dadurch gekennzeichnet,** daß die gasförmige Komponente axial abgeleitet wird.

6. Verfahren zur Zerlegung von Schaum nach Anspruch 1, 2 oder 3, **dadurch gekennzeichnet,** daß die abgetrennte flüssige Komponente dem anzusaugenden Schaum wieder zuführt wird.

7. Verfahren zur Zerlegung von Schaum nach Anspruch 1, 2, 3 oder 4, **dadurch gekennzeichnet,** daß der Schaum und/oder mindestens eine der abgetrennten Komponenten zusätzlich Scherkräften ausgesetzt wird.

8. Verfahren zur Zerlegung von Schaum nach Anspruch 1, 2, 3, 4 oder 5, **dadurch gekennzeichnet,** daß mindestens eine der abgetrennten Komponenten einer weiteren Trennung in ihre Komponenten unterzogen wird.

9. Apparat zur Zerlegung von Schaum mit einem Schleuderrad, wobei das Schleuderrad als rotierend antreibbares Pumpenrad ausgebildet ist, das einen axial angeordneten Zulauf und eine im Bereich des Pumpenradumfangs angeordneten Ablauf sowie einen Gasaustritt aufweist, **dadurch gekennzeichnet,** daß der Gasaustritt weiter vom Zentrum des Pumpenrades angeordnet ist als der Zulauf.

10. Apparat nach Anspruch 1, 2, 3, 4, 5, 6, 7, 8 oder 9, **dadurch gekennzeichnet,** daß er im Bereich des Ablaufs angeordnete Prallflächen aufweist.

11. Apparat nach Anspruch 1, 2, 3, 4, 5, 6, 7, 8, 9 oder 10, **dadurch gekennzeichnet,** daß der Zulauf als, vorzugsweise höhenverstellbar ausgebildetes, Rohr ausgebildet ist.

12. Apparat nach Anspruch 7, **dadurch gekennzeichnet,** daß oberhalb des Pumpenrades ein Abschlußdeckel (9) angeordnet ist, der vorzugsweise konisch ausgebildet ist.

13. Apparat nach einem oder mehreren der vorhergehenden Ansprüche 7 und 8, **dadurch gekennzeichnet,** daß das Pumpenrad einen oberen und einen unteren Teller (6, 5) aufweist zwischen denen Rippen (7) angeordnet sind.

14. Apparat nach Anspruch 9, **dadurch gekennzeichnet,** daß der obere Teller (6) Auslaßöffnungen (34) für die gasförmigen Komponenten aufweist, die düsenförmig ausgebildet sind.

15. Apparat nach Anspruch 9 oder 10, **dadurch gekennzeichnet,** daß der untere Teller (5) eine zentrale Öffnung (32) als Zulauf aufweist und vorzugsweise mit dem Abschlußdeckel (9) am Umfang einen Drosselspalt (33) bildend angeordnet ist.

16. Apparat nach einem oder mehreren der vorhergehenden Ansprüche 9 bis 11, **dadurch gekennzeichnet,** daß zwischen oberem Teller (6) und Abschlußdeckel (9) weitere Rippen (10) angeordnet sind.

17. Apparat nach einem oder mehreren der vorhergehenden Ansprüche 9 bis 12, **dadurch gekennzeichnet,** daß der Drosselspalt (33) und/oder die Auslaßöffnung (34) veränderbar ausgebildet ist.

18. Apparat nach einem oder mehreren der vorhergehenden Ansprüche 8 bis 13, **dadurch gekennzeichnet,** daß Abschlußdeckel (9) und das Pumpenrad als gemeinsam rotierende Baueinheit ausgebildet ist.

19. Apparat nach einem oder mehreren der vorhergehenden Ansprüche 7 bis 14, **dadurch gekennzeichnet,** daß die Teller (5, 6) und/oder Rippen (7, 10) und/oder der Abschlußdeckel (9) relativ zueinander um eine gemeinsame Rotationsachse beweglich ausgebildet sind, wobei der Abschlußdeckel (9) vorzugsweise feststeht.

20. Apparat nach einem oder mehreren der vorhergehenden Ansprüche, **dadurch gekennzeichnet,** daß er einen Antrieb (20, 21, 22) und/oder einen Drosselspalt (33) aufweist, der vorzugsweise geregelt ausgebildet ist.

**21.** Apparat nach einem oder mehreren der vorhergehenden Ansprüche, **dadurch gekennzeichnet,** daß mehrere Teller (5, 6) mit Auslaßöffnungen (34) als Gasaustritt übereinander angeordnet sind.

Fig. 1

EP 0 463 313 A1

Fig. 2

10

Fig. 3

Europäisches Patentamt

# EUROPÄISCHER RECHERCHENBERICHT

Nummer der Anmeldung

**EP 91 10 6196**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 133 484 (R.M. MERCIER)<br>* Insgesamt *<br>– – – | 1,2,4-7,9,<br>10 | B 01 D 19/02 |
| X | SU-A-5 113 37 (DOJOSINSKII L B)<br>* Figur *<br>– – – | 1-6,9-11,<br>16 | |
| A | FR-A-9 875 20 (M. JAUME)<br>– – – | 1,12-15,<br>18-20 | |
| A | DE-A-1 905 393 (INT. PAPER CO.)<br>* Figuren 3,7 *<br>– – – – – | 2,3,6,11 | |

RECHERCHIERTE SACHGEBIETE (Int. Cl.5)

B 01 D
B 01 B

Der vorliegende Recherchenbericht wurde für alle Patentansprüche erstellt

| Recherchenort | Abschlußdatum der Recherche | Prüfer |
|---|---|---|
| Den Haag | 27 Juni 91 | VAN BELLEGHEM W.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument